(19) Europäisches Patentamt
European Patent Office
Office européen des brevets

(11) Publication number: **0 395 237 A1**

# (12) EUROPEAN PATENT APPLICATION

(21) Application number: **90303607.7**

(22) Date of filing: **04.04.90**

(51) Int. Cl.5: **C08K 5/12, C08L 67/02**

(30) Priority: **24.04.89 GB 8909249**

(43) Date of publication of application:
**31.10.90 Bulletin 90/44**

(84) Designated Contracting States:
**AT BE DE DK ES FR GB IT LU NL SE**

(71) Applicant: **IMPERIAL CHEMICAL INDUSTRIES PLC**
**Imperial Chemical House, Millbank**
**London SW1P 3JF(GB)**

(72) Inventor: **Miles, Isobel Sloan**
**46 High Street, Swainby**
**Northallerton, North Yorkshire(GB)**

(74) Representative: **Rhind, John Lessels et al**
**Imperial Chemical Industries PLC Legal Department: Patents PO Box No 6 Bessemer Road**
**Welwyn Garden City Herts AL7 1HD(GB)**

## (54) Polyester composition.

(57) A polyester composition, and article formed therefrom, comprises a synthetic thermoplastic polyester and from 0.5 to 30% by weight of the composition of at least one aromatic ester of molecular weight not exceeding 1000.

EP 0 395 237 A1

## Polyester Composition

This invention relates to a polyester composition, and in particular to an article, such as a film or container produced therefrom.

Polyester materials are particularly suitable for forming into films, containers, bottles etc for use as packaging materials eg for foodstuffs, beverages such as soft drinks and beers. Unfortunately polyester materials are permeable to some extent to gases such as carbon dioxide, and the ingress of oxygen which may affect the flavour of the packaged contents. The situation can be improved by coating the polyester film, container or bottle with a layer of barrier material which has low vapour and gas permeability eg a vinylidine chloride copolymer. However, coated materials possess various disadvantages such as the need for a relatively thick coating layer, the extra costs involved associated with the use of additional polymers and processing steps, toxicity and delamination.

We have now devised a polyester composition which can be made, for example, into an article such as a film, container and bottle which has improved barrier properties, without the necessity of using additional coating materials.

Accordingly, the present invention provides a polyester composition comprising a synthetic thermoplastic polyester, wherein the composition comprises from 0.5 to 30% by weight of the composition, of at least one aromatic ester of molecular weight not exceeding 1000.

An aromatic ester for use in the present invention can be prepared by standard synthetic organic methods, for example by esterification between the appropriate acid and alcohol. The aromatic esters are relatively small molecules, with a molecular weight not exceeding 1000 and preferably less than 500. The aromatic esters are preferably halogenated, and more preferably chlorinated, although the precise location of the halogenated species within the molecule is not considered to be crucial. The aromatic esters preferably comprise a single independent benzene or naphthalene ring. Examples of suitable non-halogenated aromatic esters include 2,6 dimethyl naphthalene dicarboxylate (DMN) and dimethyl terephthalate (DMT), and suitable chlorinated aromatic esters include tetrachlorophthalic dimethyl ester (TPDE), and particularly hydroquinone dichloromethylester (HQDE) and 2,5 dichloroterephthalic dimethyl ester (DTDE).

The polyester component of the present invention may be any synthetic thermoplastic polyester, particularly a synthetic linear polyester which may be obtained by condensing one or more dicarboxylic acids or their lower alkyl (up to 6 carbon atoms) diesters, eg terephthalic acid, isophthalic acid, phthalic acid, 2,5- 2,6- or 2,7-naphthalenedicarboxylic acid, succinic acid, sebacic acid, adipic acid, azelaic acid, 4,4′-diphenyldicarboxylic acid, hexahydroterephthalic acid or 1,2-bis-p-carboxyphenoxyethane (optionally with a monocarboxylic acid, such as pivalic acid) with one or more glycols, particularly aliphatic glycols, eg ethylene glycol, 1,3-propanediol, 1,4-butanediol, neopentyl glycol and 1,4-cyclohexanedimethanol. Polyethylene terephthalate (by which term we include not only the homopolymer formed by the polycondensation of hydroxyethyl terephthalate but also copolymers containing minor amounts of units derived from other glycols or diacids, eg isophthalate copolymers) is particularly preferred.

The aromatic ester and polyester components of a composition according to the present invention may be mixed together by any suitable conventional means. For example, the components may be blended by tumble or dry mixing or by compounding - by which is meant melt mixing eg on 2-roll mills, in a Banbury mixer or in an extruder, followed by cooling and, usually, comminution into granules or chips.

The ratio of aromatic ester to polyester should generally be in the range 0.5:99.5 to 30:70% by weight, preferably from 1:99 to 20:80% by weight, and more preferably from 5:95 to 20:80% by weight.

The invention is not limited to the addition of a single aromatic ester, and if desired, two or more different aromatic esters may be added to form a polyester composition, for example to optimise the observed improvement in barrier properties.

The improvement in barrier properties obtained in the present invention is believed to be due to the suppression of the $\beta$ relaxation peak of the polyester, which occurs due to local motion of the polymer molecule. This effect is possibly due to the relatively small aromatic ester molecules filling up the relatively fixed free volume present in the polyester below its glass transition temperature (Tg), or alternatively because the aromatic ester molecules interact more strongly with adjacent polyester chains, than do the polyester chains with each other. This effect is known as antiplasticisation, the aromatic ester functioning as an antiplasticiser. The aromatic ester molecules also act as plasticisers, lowering the Tg of the polyester. The improvement in barrier properties occurs within the temperature range between the $\beta$ relaxation peak and the Tg of the aromatic ester/polyester mixture.

The polyester composition of the present invention can be formed into an article such as a film,

container, bottle or any similar receptacle that can be used for packaging materials, and particularly for packaging food and drink.

As regards films, a polyethylene terephthalate film is particularly preferred, especially such a film which has been biaxially oriented by sequential stretching in two mutually perpendicular directions, typically at a temperature in the range 70 to 125 °C, and preferably heat set, typically at a temperature in the range 150 to 250 °C, for example -as described in British patent 838708.

A polyester film prepared from a composition according to the invention may be unoriented, or uniaxially oriented, but is preferably biaxially oriented by drawing in two mutually perpendicular directions in the plane of the film to achieve a satisfactory combination of mechanical and physical properties. Simultaneous biaxial orientation may be effected by extruding a polyester tube which is subsequently quenched, reheated and then expanded by internal gas pressure to induce transverse orientation, and withdrawn at a rate which will induce longitudinal orientation. Sequential stretching may be effected in a stenter process by extruding the polyester material as a flat extrudate which is subsequently stretched first in one direction and then in the other mutually perpendicular direction. Generally, it is preferred to stretch firstly in the longitudinal direction, ie the forward direction through the film stretching machine, and then in the transverse direction. A stretched polyester film may be, and preferably is, dimensionally stabilised by heat-setting under dimensional restraint at a temperature above the glass transition temperature thereof.

An additional coating medium may optionally be applied to the polyester film. The coating medium may be applied to an unoriented or oriented film substrate. In a simultaneous stretching process, the coating medium is suitably applied to the substrate either before commencement or after conclusion of the stretching operation. In a sequential stretching process it is preferred that the coating medium should be applied to the film substrate between the two stages (longitudinal and transverse) of a biaxial stretching operation. Such a sequence of stretching and coating is especially preferred for the production of a coated polyethylene terephthalate film, which is preferably firstly stretched in the longitudinal direction over a series of rotating rollers, coated with the coating medium, and then stretched transversely in a stenter oven, preferably followed by heat setting.

The coating medium may be applied to the polyester film as an aqueous dispersion or solution in an organic solvent by any suitable conventional coating technique such as dip coating, bead coating, reverse roller coating or slot coating.

The temperatures applied to the coated film during the subsequent stretching and/or heat setting are effective in drying the aqueous medium, or the solvent in the case of solvent-applied compositions, and also in coalescing and forming the coating into a continuous and uniform layer.

If desired the coating composition may also contain a cross-linking agent which functions to form cross-links within the coating layer thereby improving adhesion to the polymeric film substrate. Additionally, the cross-linking agent should preferably be capable of internal cross-linking in order to provide protection against solvent penetration. The cross-linking of cross-linkable coating compositions can be achieved at stretching and/or heat-setting temperatures. Suitable cross-linking agents may comprise epoxy resins, alkyd resins, amine derivatives such as hexamethoxymethyl melamine, and/or condensation products of an amine, eg melamine, diazine, urea, cyclic ethylene urea, cyclic propylene urea, thiourea, cyclic ethylene thiourea, alkyl melamines, aryl melamines, benzo guanamines, guanamines, alkyl guanamines and aryl guanamines, with an aldehyde, eg formaldehyde. A useful condensation product is that of melamine with formaldehyde. The condensation product may optionally be alkoxylated. The cross-linking agent may be used in amounts of up to 25% by weight based on the weight of the polymer in the coating composition. A catalyst is also preferably employed to facilitate cross-linking action of the cross-linking agent. Preferred catalysts for cross-linking melamine formaldehyde include ammonium chloride, ammonium nitrate, ammonium thiocyanate, ammonium dihydrogen phosphate, ammonium sulphate, diammonium hydrogen phosphate, para toluene sulphonic acid, maleic acid stabilised by reaction with a base, and morpholinium para toluene sulphonate.

The coating layer is preferably applied to the polyester film at a coat weight within the range 0.1 to 10 $mgdm^{-2}$, especially 0.5 to 2.0 $mgdm^{-2}$. For films coated on both surfaces with a coating layer, each layer preferably has a coat weight within the preferred range.

The ratio of the polyester substrate to coating layer thickness may vary within a wide range, although the thickness of the coating layer preferably should not be less than 0.004% nor greater than 10% of that of the substrate. In practice, the thickness of the coating layer is desirably at least 0.01 $\mu$m and preferably should not greatly exceed about 1.0 $\mu$m.

Prior to deposition of the coating layer onto the polyester substrate the exposed surface thereof may, if desired, be subjected to a chemical or physical surface-modifying treatment to improve the bond between that surface and the subsequently applied coating layer. Modification of the substrate surface may for example be by flame treatment, ion bombardment, electron beam treatment or ultra-violet light treatment. A

preferred treatment, because of its simplicity and effectiveness is to subject the exposed surface of the substrate to a high voltage electrical stress accompanied by corona discharge. Alternatively, the substrate may be pretreated with an agent known in the art to have a solvent or swelling action on the substrate polymer. Examples of such agents, which are particularly suitable for the treatment of a polyester substrate, include a halogenated phenol dissolved in a common organic solvent eg a solution of p-chloro-m-cresol, 2,4-dichlorophenol, 2,4,5- or 2,4,6-trichlorophenol or 4-chlororesorcinol in acetone or methanol.

A coating layer may be applied to one or each surface of the polyester substrate, and one or each coating layer may be subjected to coating with additional material. The function of the original coating layer may thus be as a primer layer to aid the subsequent deposition of additional coating layer(s).

One or more of the polymeric layers of a polyester film formed from a composition according to the invention may conveniently contain any of the additives conventionally employed in the manufacture of thermoplastics polyester films. Thus, agents such as dyes, pigments, voiding agents, lubricants, anti-oxidants, anti-blocking agents, surface active agents, slip aids, gloss-improvers, prodegradants, ultra-violet light stabilisers, viscosity modifiers and dispersion stabilisers may be incorporated in the substrate and/or coating layer(s), as appropriate. In particular a coating layer, and/or a substrate, may comprise a particulate filler, such as silica, of small particle size. Desirably, a filler, if employed should be present in an amount of not exceeding 50% by weight of the polymer, and the particle size thereof should not exceed 0.5 µm.

Polyester film of the present invention can be formed into a variety of bags, pouches, sachets, receptacles, containers etc and other packaging materials.

Polyester compositions according to the present invention can also be fabricated into containers, such as bottles, by a blow moulding process wherein a preform is heated and stretched both axially and radially so as to confer biaxial orientation. A polyethylene terephthalate composition is again particularly preferred.

The preform may be made by any suitable technique such as injection moulding or extrusion.

At least one additional coating layer may be applied to the container or bottle eg coating layer(s) of barrier material in order to improve still further the barrier properties of the container. Such layer(s) may be provided by a variety of techniques, including coextrusion or overmoulding so as to form a laminar preform, and coating the final container.

Alternatively, a polyethylene terephthalate preform may be coated with a dispersion of the coating material prior to blow moulding. During the subsequent blow moulding process, the surface area of the preform is increased with consequent thinning of the preform walls and of the coating thereon. Hence in order to obtain a coating on the oriented article, eg bottle, of adequate thickness to confer the desired properties a relatively thick coating is required on the preform. Application of a number of coats may be required in order to obtain adequately thick coatings. The coating may be applied to the interior and/or exterior surface of the preform.

In order to promote adhesion between the amorphous polyethylene terephthalate substrate and the coating material, the surface of the polyethylene terephthalate may be subjected to a surface crystallisation pretreatment with a solvent such as a volatile aliphatic or alicyclic ketone. Such pretreatment, for example with methyl ethyl ketone results in a surface roughness which aids the keying of the subsequently applied coating(s). The effect is directly proportional to both time and temperature of treatment. With methyl ethyl ketone a fine-scale (about 1 µm) surface roughness, associated with a well developed spherulitic texture extending 30-50 µm inwards from the surface, is obtained by treating the preform at 40-60 °C for a period of 1-2 minutes.

The coating of a film forming polymer should be dried by heating to a temperature at which the polymer softens and fuses to a coherent film. The precise temperature required will depend on the nature of the polymer. The maximum temperature employed will depend, inter alia, on the nature of the substrate. Thus the use of drying temperatures above 80 °C, when the article is an amorphous polyethylene terephthalate preform, is undesirable as the polyethylene terephthalate of the preform may start to crystallise during the drying process.

The invention is illustrated by reference to the following Examples.

Example 1

15g of 2,5 dichloroterephthalic acid, 50 ml of methanol and 2.5 ml of concentrated sulphuric acid were mixed together and refluxed for 3-6 hours. Excess methanol was distilled off and the reaction mixture was added to sodium bicarbonate solution, followed by an addition to sodium hydroxide solution. A precipitate of 2,5 dichloroterephthalic dimethyl ester

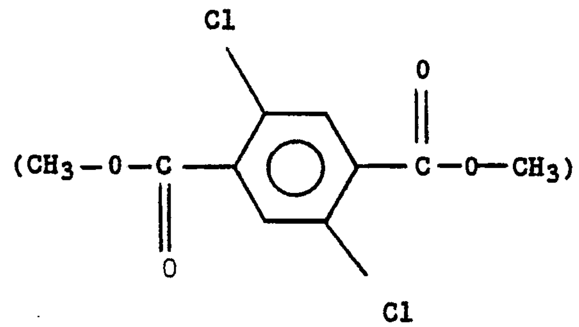

(DTDE) was formed, which was extracted and dried. The melting point of the product was 134-138 °C.

Samples of DTDE and polyethylene terephthalate (PET) were dried in a vacuum oven and blended under nitrogen, with the system occasionally evacuated, in the ratio DTDE:PET/5:95 by weight. The mixture was melted, blended for 10 minutes and extruded into distilled water using nitrogen, before being ground, dried and compression moulded into films and plaques.

The glass transition temperature (Tg) of the mixture was measured by using a Differential Scanning Calorimeter (a Perkin-Elmer 7 Series Thermal Analysis System). The result is given in Table 1 with a corresponding value for PET on its own.

A Dynamic Mechanical Thermal Analyser (Polymer Laboratories Ltd, type PL-DMTA (Mark II)) was used to measure the $\beta$ relaxation peak of mixture. The technique involved impressing a small oscillating mechanical strain (frequency of $10H_z$) onto a plaque. The resulting stress was resolved into real and imaginary components, detecting essentially all changes in the state of molecular motion by measuring tan $\delta$, which is equal to the loss modulus ($E''$)/the real modulus ($E'$). The result is given in Table 1 and it is expressed as a percentage reduction in tan $\delta$ compared to PET on its own. This is a measure of the reduction in the $\beta$ relaxation peak of the polymer.

Oxygen permeability of the mixture was measured using a Mocon 1050, (Modern Controls, Inc.). A film of the mixture was placed in the machine with the nitrogen carrier gas flowing both above and below the film, in order to obtain a background reading. The nitrogen above the film was replaced by oxygen, and the amount of oxygen able to permeate through the film was measured in the carrier gas by using a sensor. The result is given in Table 1, expressed as a percentage reduction in oxygen permeability compared to PET on its own.

Examples 2-4

The procedures in Example 1 were repeated except that films and plaques were formed from the following compositions:

DTDE:PET/10:90 by weight = Example 2
DTDE:PET/15:85 by weight = Example 3
DTDE:PET/20:80 by weight = Example 4
The results are given in Table 1.

Examples 5 and 6

Hydroquinone dichloromethyl ester

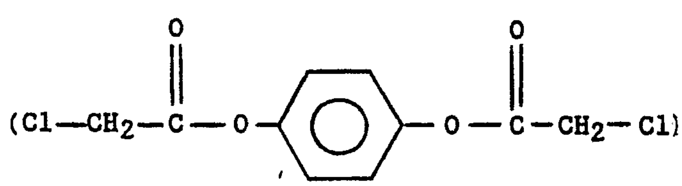

(HQDE) was prepared in a similar manner to DTDE, as described in Example 1. Thionyl chloride was added dropwise to chloroacetic acid, followed by the addition of hydroquinone. The mixture was heated, and

sodium bicarbonate added.

Once effervescence had ceased, isopropanol was added, the mixture heated, and white crystals of the product extracted. Films and plaques were formed from the following compositions:
HQDE:PET/ 5:95 by weight = Example 5
HQDE:PET/10:90 by weight = Example 6
using the procedures described in Example 1.

Tg, tan δ and oxygen permeability measurements were performed as described in Example 1, and the results are given in Table 1.

Examples 7 and 8

Tetrachlorophthalic dimethyl ester

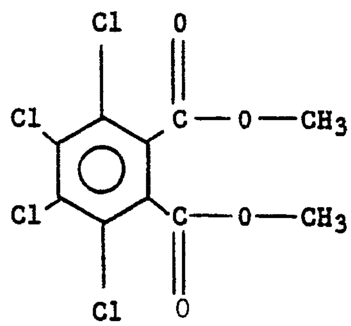

(TPDE) was prepared in a similar manner to DTDE, as described in Example 1. 50g of tetrachlorophthalic anhydride, 75 ml of methanol and 5 ml of concentrated sulphuric acid were mixed together and refluxed for 6-12 hours. Excess methanol was distilled off, and the reaction mixture was added to sodium bicarbonate solution, followed by an addition to sodium hydroxide solution. The formed precipitate was extracted and dried. The melting point of the product was 90-91 °C. Films and plaques were formed from the following ratios:
DTDE:PET/ 5.95 by weight = Example 7
DTDE:PET/10:90 by weight = Example 8
using the procedures described in Example 1.

Tg, tan δ and oxygen permeability measurements were performed as described in Example 1, and the results are given in Table 1.

Examples 9-11

Films and plaques were formed from the following compositions of dimethyl terephthalate (DMT) and PET:
DMT:PET/ 5:95 by weight = Example 9
DMT:PET/10:90 by weight = Example 10
DMT:PET/15:85 by weight = Example 11
using the procedures described in Example 1.

Examples 12 and 13

Films and plaques were formed from the following compositions of 2,6 dimethyl naphthalene dicarboxylate (DMN) and PET
DMN:PET/5:95 by weight = Example 12
DMN:PET/10:90 by weight = Example 13
using the procedures described in Example 1.

Tg, tan δ and oxygen permeability measurements were performed as described in Example 1, and the results are given in Table 1.

Table 1

| Example No | Additive | % of Additive in PET | Tg | % reduction in Tan $\delta$ relative to PET | % reduction in oxygen permeability relative to PET |
|---|---|---|---|---|---|
| - | NONE ie PET ONLY | | 77 | 0 | 0 |
| 1 | DTDE | 5 | 66 | 20 | 20-25 |
| 2 | DTDE | 10 | 59 | 26.2 | 32.5 |
| 3 | DTDE | 15 | 47 | 41.7 | 40.6 |
| 4 | DTDE | 20 | 42 | 42.6 | - |
| 5 | HQDE | 5 | 57 | 15 | 15 |
| 6 | HQDE | 10 | 57 | 30 | 30 |
| 7 | TPDE | 5 | 67 | 30 | 10-15 |
| 8 | TPDE | 10 | 65 | 25 | 10-15 |
| 9 | DMT | 5 | 66 | 24 | 27 |
| 10 | DMT | 10 | 58 | 33 | 40 |
| 11 | DMT | 15 | 57 | 39 | - |
| 12 | DMN | 5 | 66 | 14 | 29 |
| 13 | DMN | 10 | 64 | 32 | 41 |

The results in Table 1 illustrate the reduction in oxygen permeability that can be achieved using PET compositions according to the present invention. This improvement in barrier properties appears to be related to the reduction in the $\beta$ transition peak.

**Claims**

1. A polyester composition comprising a synthetic thermoplastic polyester, characterised in that the composition comprises from 0.5 to 30% by weight of the composition, of at least one aromatic ester of molecular weight not exceeding 1000.

2. A composition according to claim 1 wherein the aromatic ester comprises a single independent benzene or naphthalene ring.

3. A composition according to either one of claims 1 and 2 wherein the aromatic ester comprises at least one halogen atom.

4. A composition according to any one of the preceding claims wherein the aromatic ester functions as an antiplasticiser.

5. A composition according to any one of the preceding claims wherein the synthetic thermoplastic polyester comprises polyethylene terephthalate.

6. An article formed from a composition according to any one of the preceding claims.

7. An article according to claim 6 in the form of a film.

8. A film according to claim 7 which is biaxially oriented.

9. An article according to claim 6 in the form of a bottle.

10. A bottle according to claim 9 which is biaxially oriented and formed from a preform which is stretched axially and radially.

European Patent Office

# EUROPEAN SEARCH REPORT

Application Number

EP 90 30 3607

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-177208 (POLYPLASTICS CO. LTD.)<br>* page 4, line 16 - page 5, line 25; claims 1-5 *<br>--- | 1, 2, 4-6 | C08K5/12<br>C08L67/02 |
| A | FR-A-2146199 (DEERING MILLIKEN RESEARCH CORPORATION)<br>* claims 1-8 *<br>----- | 1-3 | |
| | | | TECHNICAL FIELDS SEARCHED (Int. Cl.5 ) |
| | | | C08K<br>C08L |

The present search report has been drawn up for all claims

| Place of search | Date of completion of the search | Examiner |
|---|---|---|
| THE HAGUE | 26 JULY 1990 | WILSON A.J.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

1

EPO FORM 1503 03.82 (P0401)